# EUROPEAN PATENT APPLICATION

(11) **EP 4 660 921 A1**
(43) Date of publication of application: **10.12.2025**
(21) Application number: 24764226.7
(22) Date of filing: 04.03.2024
(51) Int. Cl.: G06Q 30/06, G06F 40/186, G09F 3/20

(54) **METHOD, SYSTEM, AND USER TERMINAL FOR EDITING PRODUCT-RELATED INFORMATION DISPLAYED ON ELECTRONIC SHELF LABEL**

(30) Priority: 02.03.2023 KR 20230027865
(71) Applicant: SOLUM CO., LTD., Gyeonggi-do 16914 (KR)
(72) Inventor: KIM, Ji Eun, Seongnam-si, Gyeonggi-do 13618 (KR); KIM, Eo Jin, Suwon-si, Gyeonggi-do 16426 (KR); HEO, Jae Keon, Yongin-si, Gyeonggi-do 16914 (KR)
(74) Representative: BCKIP Part mbB
(86) International application number: PCT/KR2024/002743
(87) International publication number: WO 2024/181827

(57) **Abstract**

An embodiment provides a method for editing product-related information displayed on an electronic shelf label, comprising: pairing of a user terminal with an electronic shelf label, where the user terminal receives a pairing signal from the electronic shelf label, the signal being initiated by a user input via a button of the electronic shelf label, displaying a template editing UI by the user terminal, where the UI provides an editing function for a template to which product information data can be applied, applying the information according to an editing user input to the template, when the user terminal receives the editing user input for the template via the template editing UI, and transmitting template data, to which the information from the editing user input has been applied, from the user terminal to the paired electronic shelf label.

## Description

### BACKGROUND OF THE INVENTION

### Technical Field

The present disclosure relates to a method and system for editing product-related information displayed on electronic shelf labels.

### Related Art

In application fields such as displaying product information of products displayed in a store, the use of an electronic label is gradually spreading. An electronic label, also called an electronic shelf label or an electronic tag, is connected to a server through a gateway to receive product information to be displayed, and displays the received product information on an electronic paper display. The use of the electronic label is spreading because the electronic label operates with low power, allowing a battery to be used for a long time, and because display information may be changed through a communication network, reducing labor costs for store management.

When a new product is displayed on a shelf, a procedure is required to assign the electronic label to display the information of that product. In general, when a store manager reads a barcode attached to the electronic label with a terminal and then reads a product barcode and transmits them to a management server, the management server assigns a corresponding electronic label to the product, registers it in a database, and processes it so that the product information of the product is transmitted to the electronic label and the display is changed.

On the other hand, as product sales are made, the kinds of products displayed on the shelf may change, or the number of products may decrease. In addition, the number of displayed products with low consumer demand may not change even as time passes. In this way, it is necessary to change product-related information displayed on the electronic label based on a change in a product display state. For example, when the kind of product displayed on the shelf is changed, the name and kind of the product displayed on the electronic label may be changed, and when the number of products decreases, contents such as "almost sold out" may be displayed on the electronic label. In addition, when the number of products displayed on the shelf does not decrease, information on a discount event for the product may be displayed on the electronic shelf label to promote sales.

In order to change the product-related information displayed on such an electronic label, the server may generate the product-related information to be displayed on the electronic label and transmit it to the electronic label. However, in this case, the product-related information is edited by an administrator who manages the server. Therefore, the product-related information may not be directly edited by field employees of the store where the product is displayed, and the product-related information may not be efficiently modified according to the on-site situation, so the flexibility of editing the product-related information displayed on the electronic label may be reduced.

### DETAILED DESCRIPTION OF INVENTION

### TECHNICAL PROBLEMS

Various embodiments of the present disclosure are to provide a method, system, and user terminal that enable field employees in a store to conveniently and efficiently edit product-related information displayed on an electronic shelf label using a user terminal.

Various embodiments of the present disclosure are to provide a method, system, and user terminal for efficiently editing product-related information displayed on a plurality of electronic shelf labels by pairing the plurality of electronic shelf labels with a user terminal through manipulation of buttons respectively provided on the plurality of electronic shelf labels.

### TECHNICAL SOLUTION

According to an embodiment, there is provided a method for editing product-related information displayed on an electronic shelf label, the method comprising: pairing of a user terminal with an electronic shelf label, where the user terminal receives a pairing signal from the electronic shelf label, the signal being initiated by a user input via a button of the electronic shelf label, displaying a template editing UI by the user terminal, where the UI provides an editing function for a template to which product information data can be applied, applying the information according to an editing user input to the template, when the user terminal receives the editing user input for the template via the template editing UI, and transmitting template data, to which the information according to the editing user input has been applied, from the user terminal to the paired electronic shelf label.

In another aspect, the method may further comprises: transmitting product information data related to the electronic shelf label from the electronic shelf label to the user terminal before displaying a template editing UI by the user terminal.

In another aspect, in the in the displaying a template editing UI by the user terminal, the user terminal may display a template editing UI that provides an editing function for the template to which the product information data related to the electronic shelf label is applied.

In another aspect, in in the pairing of a user terminal with an electronic shelf label, the pairing signal may be transmitted from the electronic shelf label to the user terminal according to a user input through the button of the electronic shelf label, so that the user terminal is paired with the electronic shelf label based on a Bluetooth method.

In another aspect, the method may further comprise: displaying a template selection UI by the user terminal, where the UI provides a plurality of templates to which the product information data can be applied before displaying a template editing UI by the user terminal,

In another aspect, in in the displaying a template editing UI by the user terminal, the user terminal may display the template editing UI that provides an editing function for a first template to which the product information data is applicable, when the user terminal receives a template selection user input for selecting the first template from among the plurality of templates through the template selection UI.

In another aspect, the pairing of a user terminal with an electronic shelf label may comprise: pairing the user terminal with a first electronic shelf label according to a user input through a button of the first electronic shelf label, and pairing the user terminal with a second electronic shelf label according to a user input through a button of the second electronic shelf label which is different from the first electronic shelf label.

In another aspect, the method may further comprise: receiving first product information data related to the first electronic shelf label from the first electronic shelf label by the user terminal; and receiving second product information data related to the second electronic shelf label from the second electronic shelf label by the user terminal.

In another aspect, in the displaying a template editing UI by the user terminal, and the applying the information according to an editing user input to the template, the user terminal may display the template editing UI that provides an editing function for the template to which the information data of the first product is applied, and the user terminal may apply the information according to a first editing user input to the template, when the user terminal receives the first editing user input for editing the template to which the information data of the first product is applied through the template editing UI, the user terminal may displays the template editing UI that provides an editing function for the template to which the information data of the second product is applied, and the user terminal may apply the information according to a second editing user input to the template, when the user terminal receives the second editing user input for editing the template to which the information data of the second product is applied through the template editing UI, and in the transmitting template data, to which the information from the editing user input has been applied, from the user terminal to the paired electronic shelf label, the user terminal may transmit the data of the template to which the information according to the first editing user input is applied to the first electronic shelf label, and transmit the data of the template to which the information according to the second editing user input is applied to the second electronic shelf label.

In another aspect, the method may further comprise: before the displaying a template editing UI by the user terminal, receiving first identification information data related to the first electronic shelf label from the first electronic shelf label by the user terminal, receiving second identification information data related to the second electronic shelf label from the second electronic shelf label by the user terminal, and displaying an electronic shelf label selection UI that provides an identification information list including the first identification information and the second identification information, based on the first identification information data and second identification information data by the user terminal.

In another aspect, in the displaying a template editing UI by the user terminal, and the applying the information according to an editing user input to the template, the user terminal may display the template editing UI that provides an editing function for the template to which the information data of the first product related to the first electronic shelf label is applied, when the user terminal receives a first identification information selection user input for selecting the first identification information through the electronic shelf label selection UI, and the user terminal may apply the information according to the first editing user input to the template, when the user terminal receives a first editing user input for editing the template to which the information data of the first product is applied through the template editing UI.

In another aspect, the user terminal may display the template editing UI that provides an editing function for the template to which the information data of the second product related to the second electronic shelf label is applied, when the user terminal receives a second identification information selection user input for selecting the second identification information through the electronic shelf label selection UI, and the user terminal may apply the information according to the second editing user input to the template, when the user terminal receives a second editing user input for editing the template to which the information data of the second product is applied through the template editing UI.

In another aspect, in the transmitting template data, to which the information from the editing user input has been applied, from the user terminal to the paired electronic shelf label, the user terminal may transmit the data of the template to which the information according to the first editing user input is applied to the first electronic shelf label, and transmit the data of the template to which the information according to the second editing user input is applied to the second electronic shelf label.

In another aspect, in the displaying a template editing UI by the user terminal, pairing of an additional electronic shelf label, different from the electronic shelf label, with the user terminal is blocked according to a user input through a button of the additional electronic shelf label.

According to an embodiment, there is provided a method for editing product-related information displayed on an electronic shelf label, the method comprising: displaying a template editing UI by a user terminal, where the UI provides an editing function for a template to which product information data can be applied, applying the information according to an editing user input to the template, when the user terminal receives the editing user input for the template via the template editing UI, pairing of the user terminal with an electronic shelf label, where the user terminal receives a pairing signal from the electronic shelf label, the signal being initiated by a user input via a button of the electronic shelf label, and transmitting template data, to which the information from the editing user input has been applied, from the user terminal to the paired electronic shelf label.

In another aspect, the method may further comprise: displaying a template selection UI by the user terminal, where the UI provides a plurality of templates to which the product information data can be applied before displaying a template editing UI by the user terminal.

In another aspect, in the displaying a template editing UI by the user terminal, the user terminal may display the template editing UI that provides an editing function for first template to which the product information data is applicable, when the user terminal receives a template selection user input for selecting first template from among the plurality of templates through the template selection UI.

In another aspect, the method may further comprise: displaying an editing-target product selection UI by the user terminal, where the UI provides a product information list containing information data for multiple products before the displaying a template editing UI by a user terminal.

In another aspect, in the displaying a template editing UI by a user terminal, the user terminal may display a template editing UI that provides an editing function for the template to which the information data of the selected product is applied, when the user terminal receives a product selection user input for selecting information data of any one product from among the plurality of products through the editing-target product selection UI.

In another aspect, in the pairing of the user terminal with an electronic shelf label, the user terminal may be paired with the first electronic shelf label according to a user input through a button of the first electronic shelf label, and the user terminal may be paired with the second electronic shelf label according to a user input through a button of a second electronic shelf label different from the first electronic shelf label.

In another aspect, in the in the displaying a template editing UI by the user terminal, and the applying the information according to an editing user input to the template, the user terminal may display a template editing UI that provides an editing function for the template to which the information data of the first product is applied, when the user terminal receives a first product selection user input for selecting the information data of any first product from among the plurality of products through the editing-target product selection UI, the user terminal may apply the information according to the first editing user input to the template, when the user terminal receives a first editing user input for editing the template to which the information data of the first product is applied through the template editing UI, the user terminal may display a template editing UI that provides an editing function for the template to which the information data of the second product is applied, when the user terminal receives a second product selection user input for selecting the information data of any second product, different from the first product, from among the plurality of products through the editing-target product selection UI, and the user terminal may apply the information according to the second editing user input to the template, when the user terminal receives a second editing user input for editing the template to which the information data of the second product is applied through the template editing UI.

In another aspect, in the transmitting template data, to which the information from the editing user input has been applied, from the user terminal to the paired electronic shelf label, the user terminal may transmit the data of the template to which the information according to the first editing user input is applied to the first electronic shelf label, and may transmit the data of the template to which the information according to the second editing user input is applied to the second electronic shelf label.

According to an embodiment, there is provided a system for performing a method of editing product-related information displayed on an electronic shelf label, the system comprising an electronic shelf label provided on a shelf where a product is displayed and including a button, and a user terminal including a memory in which a program for performing the method of editing the product-related information displayed on the electronic shelf label is stored, and a processor for executing the program, the method comprising: pairing of a user terminal with an electronic shelf label, where the user terminal receives a pairing signal from the electronic shelf label, the signal being initiated by a user input via a button of the electronic shelf label, displaying a template editing UI by the user terminal, where the UI provides an editing function for a template to which product information data can be applied, applying the information according to an editing user input to the template, when the user terminal receives the editing user input for the template via the template editing UI, and transmitting template data, to which the information from the editing user input has been applied, from the user terminal to the paired electronic shelf label.

According to an embodiment, there is provided a user terminal for editing product-related information displayed on an electronic shelf label, the user terminal including a memory in which a program for performing the method of editing the product-related information displayed on the electronic shelf label is stored, and a processor for executing the program, the method comprising: pairing of a user terminal with an electronic shelf label, where the user terminal receives a pairing signal from the electronic shelf label, the signal being initiated by a user input via a button of the electronic shelf label, displaying a template editing UI by the user terminal, where the UI provides an editing function for a template to which product information data can be applied, applying the information according to an editing user input to the template, when the user terminal receives the editing user input for the template via the template editing UI, and transmitting template data, to which the information from the editing user input has been applied, from the user terminal to the paired electronic shelf label.

### EFFECT OF INVENTION

According to various embodiments of the present disclosure, it is possible to provide a method, system, and user terminal that enable field employees in a store to conveniently and efficiently edit product-related information displayed on an electronic shelf label using a user terminal.

According to various embodiments of the present disclosure, it is possible to provide a method, system, and user terminal for efficiently editing product-related information displayed on a plurality of electronic shelf labels by pairing the plurality of electronic shelf labels with a user terminal through manipulation of buttons respectively provided on the plurality of electronic shelf labels, and editing information data of a plurality of products associated with the plurality of electronic shelf labels on the user terminal paired with the plurality of electronic shelf labels.

### BRIEF DESCRIPTION OF THE DRAWING

FIG. 1 illustrates the exemplary configuration of a system for editing product-related information displayed on an electronic shelf label according to an embodiment.
FIG. 2 is a block diagram illustrating the exemplary configuration of a server according to an embodiment.
FIG. 3 illustrates the pairing operation of a user terminal and an electronic shelf label according to an embodiment.
FIG. 4 is a flowchart illustrating a method of editing product-related information displayed on an electronic shelf label according to an embodiment.
FIG. 5 illustrates a template editing UI according to an embodiment.
FIG. 6 is a flowchart illustrating a method of editing product-related information displayed on an electronic shelf label according to another embodiment.
FIG. 7 illustrates a template editing UI according to another embodiment.
FIG. 8 is a flowchart illustrating a method of editing product-related information displayed on an electronic shelf label according to a further embodiment.
FIG. 9 illustrates a first template selection UI and a second template selection UI according to an embodiment.
FIG. 10 is a flowchart illustrating a method of editing product-related information displayed on an electronic shelf label according to a further embodiment.
FIG. 11 is a flowchart illustrating a method of editing product-related information displayed on an electronic shelf label according to a further embodiment.
FIG. 12 is a flowchart illustrating a method of editing product-related information displayed on an electronic shelf label according to a further embodiment.
FIG. 13 illustrates an electronic shelf label selection UI according to an embodiment.
FIG. 14 illustrates a method of transmitting product-related information data, which is edited through an electronic shelf label selection UI, to an electronic shelf label according to another embodiment.
FIG. 15 is a flowchart illustrating a method of editing product-related information displayed on an electronic shelf label according to a further embodiment.
FIG. 16 is a flowchart illustrating a method of editing product-related information displayed on an electronic shelf label according to a further embodiment.
FIG. 17 is a flowchart illustrating a method of editing product-related information displayed on an electronic shelf label according to a further embodiment.
FIG. 18 is a flowchart illustrating a method of editing product-related information displayed on an electronic shelf label according to a further embodiment.

### BEST MODE FOR CARRYING OUT THE INVENTION

Since the present disclosure may include various modifications and may have various embodiments, specific embodiments will be illustrated in the drawings and described in detail in the detailed description. The effects and features of the present disclosure and methods of achieving them will become apparent with reference to the embodiments described in detail below together with the drawings. However, the present disclosure is not limited to the embodiments as disclosed below, but may be implemented in various forms. In the following embodiments, terms such as first, second, and the like are used for the purpose of distinguishing one component from another component, rather than having a limited meaning. In addition, a singular expression includes a plural expression unless the context clearly indicates otherwise. In addition, terms such as "include" or "have" mean that features or components described herein exist, and do not preclude the possibility that one or more other features or components are added. In addition, in the drawings, the size of each of the components may be exaggerated or reduced for convenience of illustration. For example, the size and thickness of each component shown in the drawings are arbitrarily shown for convenience of illustration, and thus the present disclosure is not necessarily limited to the illustration.

Hereinafter, embodiments of the present disclosure will be described in detail with reference to the accompanying drawings, and the same or corresponding components will be given the same reference numerals when described with reference to the drawings, and redundant descriptions thereof will be omitted.

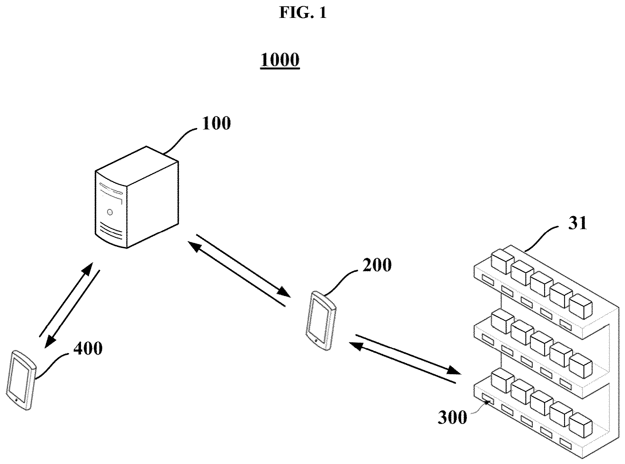

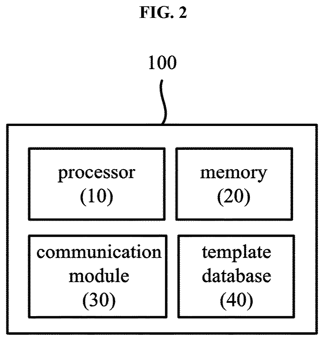

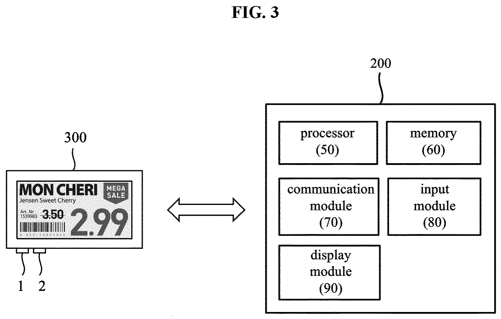

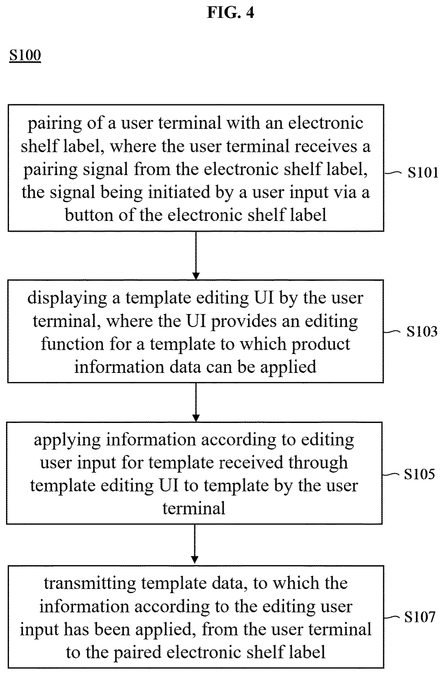

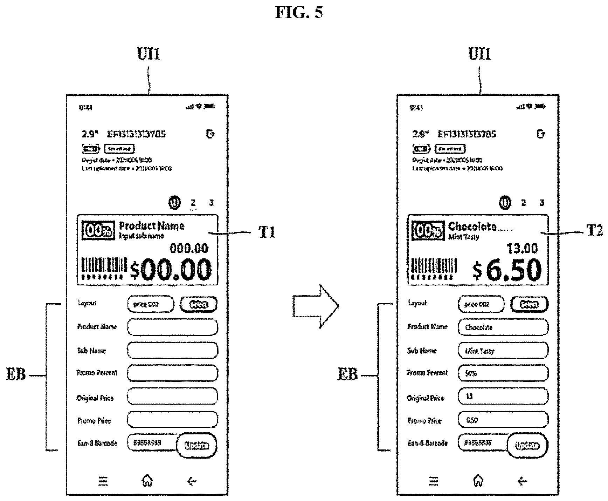

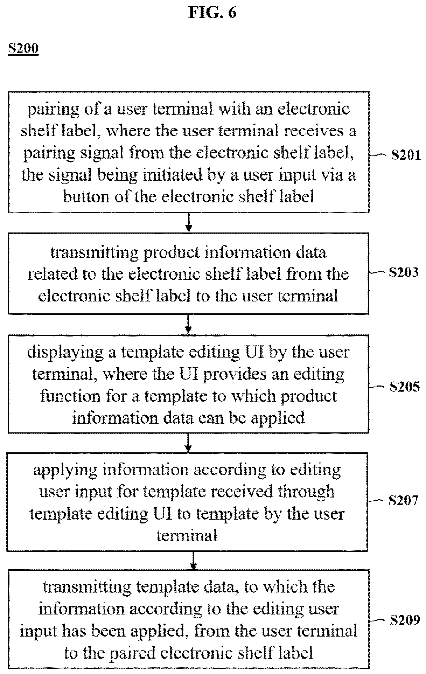

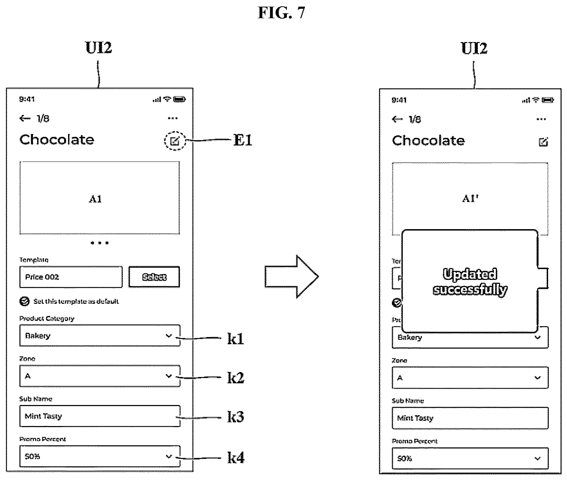

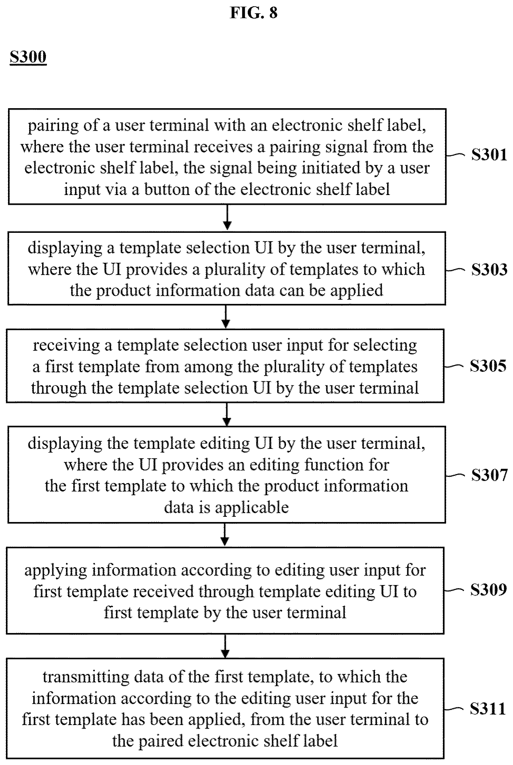

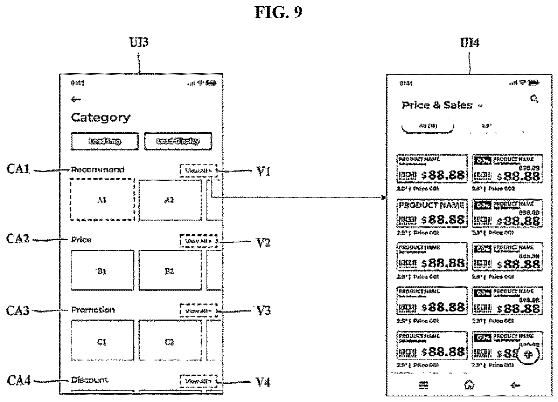

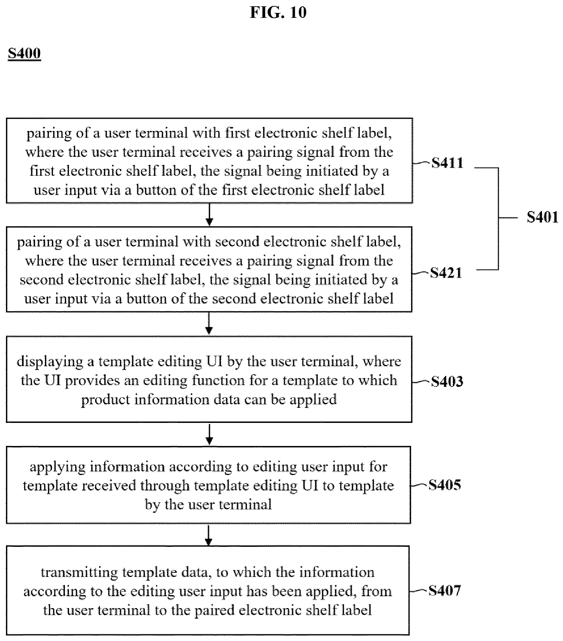

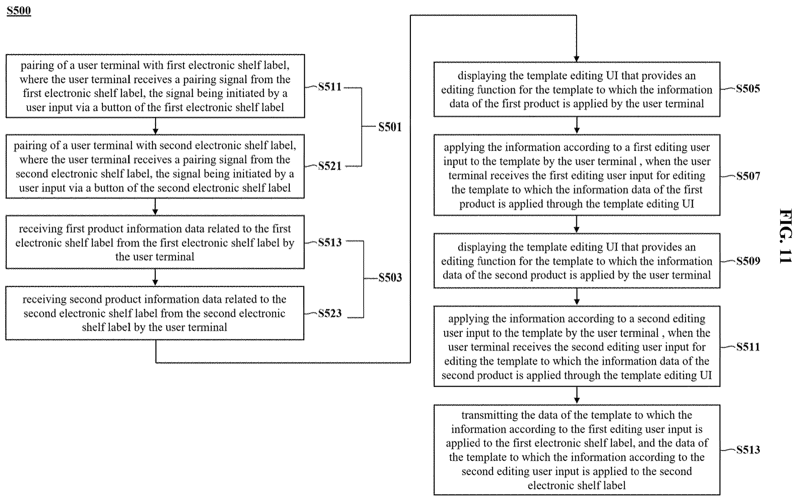

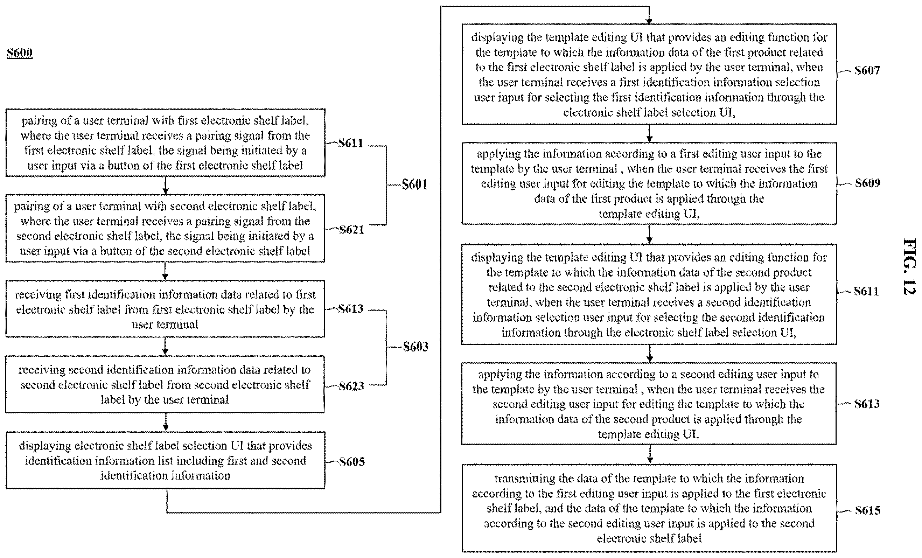

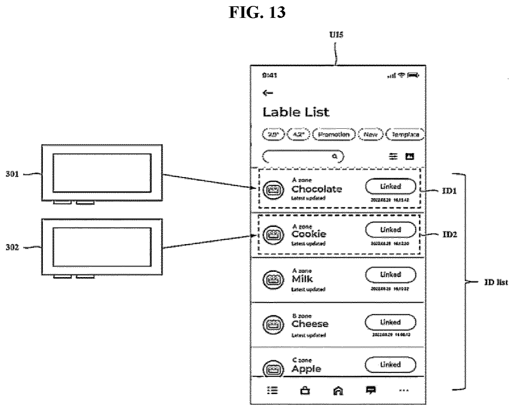

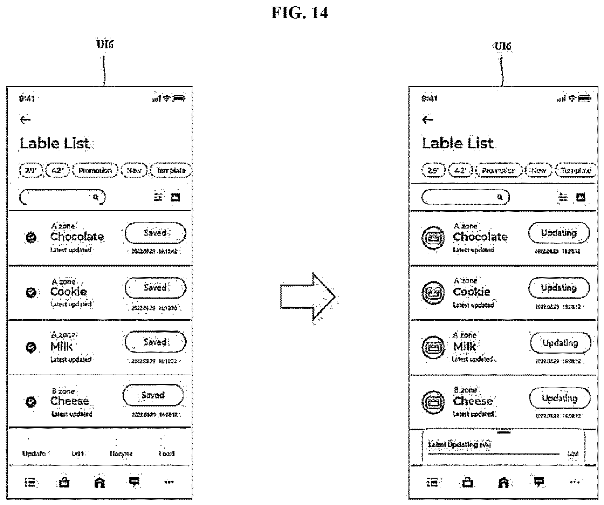

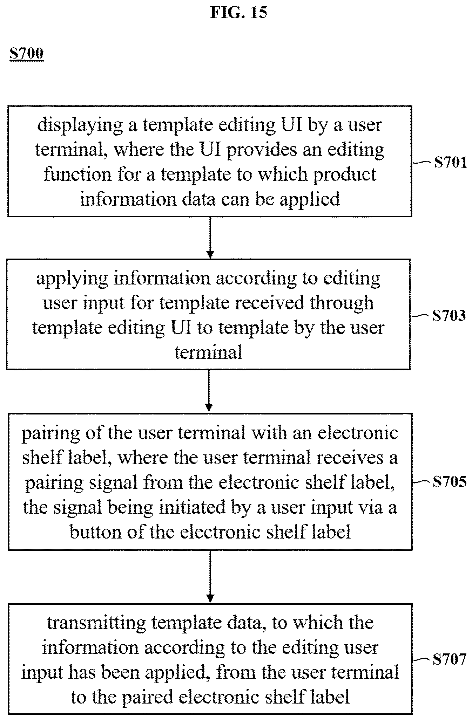

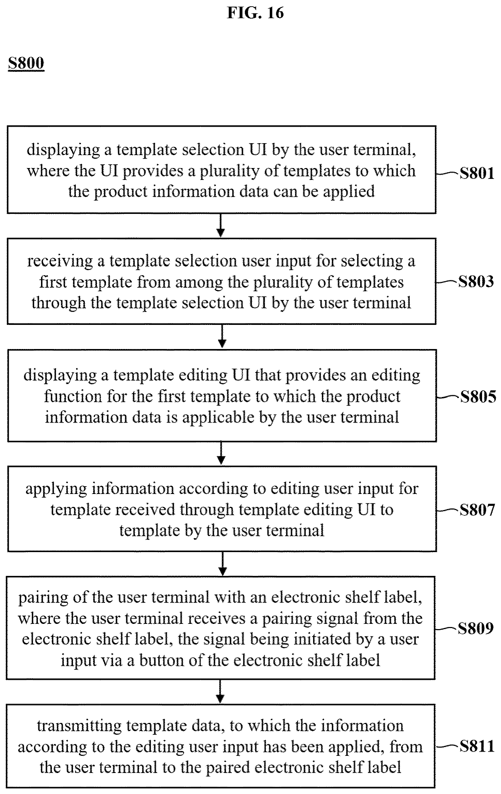

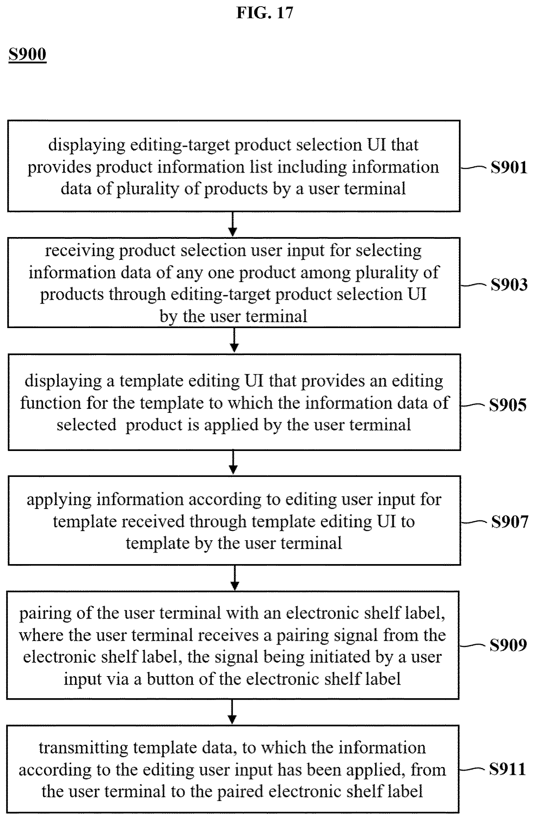

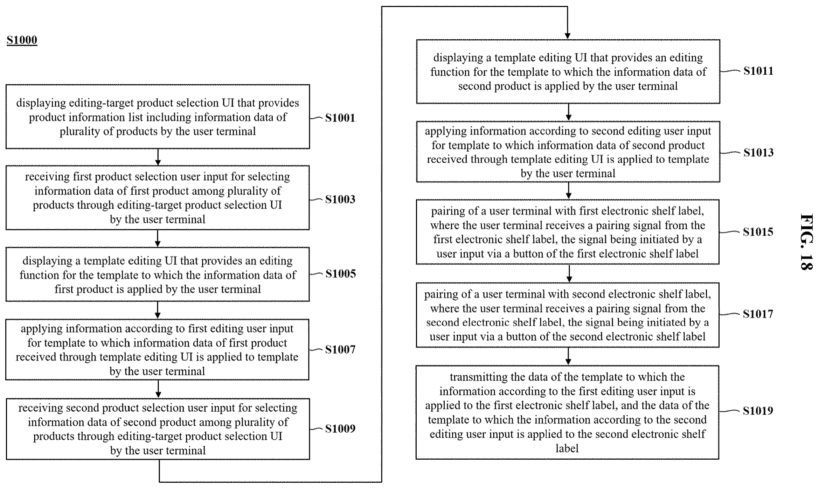

FIG. 1 illustrates the exemplary configuration of a system 1000 for editing product-related information displayed on an electronic shelf label 300 according to an embodiment. FIG. 2 is a block diagram illustrating the exemplary configuration of a server 100 according to an embodiment. FIG. 3 illustrates the pairing operation of a user terminal 200 and an electronic shelf label 300 according to an embodiment. FIG. 4 is a flowchart illustrating a method S100 of editing product-related information displayed on an electronic shelf label 300 according to an embodiment. FIG. 5 illustrates a template editing UI UI1 according to an embodiment. FIG. 6 is a flowchart illustrating a method S200 of editing product-related information displayed on an electronic shelf label 300 according to another embodiment. FIG. 7 illustrates a template editing UI UI2 according to another embodiment. FIG. 8 is a flowchart illustrating a method S300 of editing product-related information displayed on an electronic shelf label 300 according to a further embodiment. FIG. 9 illustrates a first template selection UI UI3 and a second template selection UI UI4 according to an embodiment. FIG. 10 is a flowchart illustrating a method S400 of editing product-related information displayed on an electronic shelf label 300 according to a further embodiment. FIG. 11 is a flowchart illustrating a method S500 of editing product-related information displayed on an electronic shelf label 300 according to a further embodiment. FIG. 12 is a flowchart illustrating a method S600 of editing product-related information displayed on an electronic shelf label according to a further embodiment. FIG. 13 illustrates an electronic shelf label selection UI UI5 according to an embodiment. FIG. 14 illustrates a method of transmitting product-related information data, which is edited through an electronic shelf label selection UI UI6, to an electronic shelf label 300 according to another embodiment. FIG. 15 is a flowchart illustrating a method S700 of editing product-related information displayed on an electronic shelf label 300 according to a further embodiment. FIG. 16 is a flowchart illustrating a method S800 of editing product-related information displayed on an electronic shelf label 300 according to a further embodiment. FIG. 17 is a flowchart illustrating a method S900 of editing product-related information displayed on an electronic shelf label 300 according to a further embodiment. FIG. 18 is a flowchart illustrating a method S1000 of editing product-related information displayed on an electronic shelf label 300 according to a further embodiment.

### - System 1000

Referring to FIG. 1, a system 1000 for editing product-related information displayed on an electronic shelf label 300 according to an embodiment may provide an environment in which field employees in a store may quickly and efficiently change the product-related information displayed on the electronic shelf label 300 using a user terminal 200. The system 1000 may include a server 100, the user terminal 200, and the electronic shelf label 300. The system 1000 may further include an administrator terminal 400.

The server 100, the user terminal 200, and the administrator terminal 400 may be connected to each other via a network. Here, the network according to the embodiment may refer to a connection structure that enables information exchange between respective nodes such as the server 100, the user terminal 200, and the administrator terminal 400. For example, the network may include, but is not limited to, a 3GPP (3rd Generation Partnership Project) network, an LTE (Long Term Evolution) network, a WIMAX (World Interoperability for Microwave Access) network, the Internet, a LAN (Local Area Network), a Wireless LAN (Wireless Local Area Network), a WAN (Wide Area Network), a PAN (Personal Area Network), a Bluetooth network, a satellite broadcasting network, an analog broadcasting network, and a DMB (Digital Multimedia Broadcasting) network.

The electronic shelf label 300 may be wirelessly connected to the server 100 through a separate gateway (not shown). However, the present disclosure is not limited thereto, and the electronic shelf label 300 may be connected to the user terminal 200 via wireless communication. For example, the electronic shelf label 300 may be paired with the user terminal 200 based on a Bluetooth function.

Hereinafter, the server 100, the user terminal 200, the electronic shelf label 300, and the administrator terminal 400 included in the system 1000 will be described in detail with reference to the accompanying drawings.

### - Server 100

The server 100 may perform a series of processes for providing an environment necessary to perform a method for editing product-related information displayed on the electronic shelf label 300.

In detail, in order to perform the method of editing the product-related information on an external device such as the user terminal 200, in one embodiment, the server 100 may exchange necessary data with the external device. Thus, the server 100 may provide the environment necessary to perform the method of editing the product-related information.

For example, the server 100 may provide an environment in which a product-related information editing application may operate on the user terminal 200 (e.g., a mobile type computing device and/or a desktop type computing device, etc.). The server 100 may include an application program, data and/or instruction for operating the product-related information editing application, and may transmit data based thereon to the user terminal 200.

In addition, the server 100 may provide a license key to the user terminal 200 and the administrator terminal 400.

For example, the server 100 may provide an editing license key that grants authority to the user terminal 200 to edit the product-related information displayed on the electronic shelf label 300. The user terminal 200 may be used by a field employee in a store. The field employee may edit the product-related information displayed on the electronic shelf label 300 using the user terminal 200 that receives the editing license key.

Further, for example, the server 100 may provide an authoring license key that grants authority to the administrator terminal 400 to author a plurality of templates to which product-related information is applied. The administrator terminal 400 may be used by an intermediate manager in a store. The intermediate manager may author the plurality of templates to which the product-related information displayed on the electronic shelf label 300 is applied, by using the administrator terminal 400 that has received the authoring license key.

Referring to FIG. 2, the server 100 may be implemented as a predetermined computing device including at least one processor 10 for data processing, a memory 20 for storing application programs, data and/or instructions, at least one communication module 30 for exchanging data with the external device, and a template database 40 for storing the template including the product-related information.

The processor 10 may control the overall operation of components included in the server 100 to provide the environment in which the product-related information editing application may operate on the user terminal 200.

The processor 10 may be a system on chip (SOC) including a central processing unit (CPU) and/or a graphics processing unit (GPU), and may execute an operating system (OS) and/or application program stored in the memory 20.

Further, the processor 10 may communicate internally with each component included in the server 100 via a system bus, and may include one or more predetermined bus structures including a local bus.

The processor 10 may be implemented using at least one of ASICs (application specific integrated circuits), DSPs (digital signal processors), DSPDs (digital signal processing devices), PLDs (programmable logic devices), FPGAs (field programmable gate arrays), controllers, microcontrollers, microprocessors, and electric units for performing other functions.

The memory 20 may store one or more of an operating system (OS), various application programs, data, and instructions to provide an environment necessary to perform a method of editing product-related information.

Further, the memory 20 may include a program area and a data area. Here, the program area according to the embodiment may be linked between the operating system (OS) that boots the server 100 and functional elements, and the data area may store data generated according to the use of the server 100.

In one embodiment, the memory 20 may be various storage devices such as ROM, RAM, EPROM, flash drive, or hard drive, and may also be web storage that performs a storage function on the Internet. Further, the memory 20 may be a removable recording medium on the server.

The communication module 30 may include various types of communication devices that enable the server 100 to transmit and receive data to and from the external device. The server 100 may transmit data based on the application program, data and/or instruction for operating the product-related information editing application to the user terminal 200 through the communication module 30.

The template database 40 may be a database that stores the template to which the product-related information is applied. For example, the template database 40 may store data on a plurality of templates into which the product-related information may be input. The plurality of templates may have different forms depending on user input. For example, the plurality of templates may be generated based on the user input from an intermediate manager in a store through the administrator terminal 400. The intermediate manager may author a desired form of template via the administrator terminal 400. The administrator terminal 400 may transmit data on the plurality of templates to the server 100, and the data on the plurality of templates may be stored in the template database 40.

In the foregoing description, it has been explained that the server 100 according to an embodiment performs the functional operations as described above. However, according to the embodiment, at least a portion of the functional operations performed by the server 100 may be carried out by the external device (e.g., the user terminal 200 and/or the administrator terminal 400), and at least a portion of the functional operations performed by the external device may be further carried out by the server 100. Various embodiments are therefore possible.

### - User terminal 200 and Administrator terminal 400

The user terminal 200 and the administrator terminal 400 may be predetermined computing devices in which the product-related information editing application is installed. A usage subject of the user terminal 200 and a usage subject of the administrator terminal 400 may be different from each other (the usage subject of the user terminal 200 may be a field employee, and the usage subject of the administrator terminal 400 may be an intermediate manager). However, the user terminal 200 and the administrator terminal 400 may be substantially the same in structure.

A program and an application for performing the method of editing the product-related information may be installed in the user terminal 200 and the administrator terminal 400. The user terminal 200 may receive and store the plurality of templates from the server 100. The user terminal 200 may receive the user input for editing the product-related information through the application. The administrator terminal 400 may transmit data related to the plurality of templates to the server 100. The administrator terminal 200 may receive the user input for authoring the template to which the product-related information is applied through the application.

The user terminal 200 and the administrator terminal 400 may be implemented, for example, as a computer or a portable terminal that may access the server 100 through a network. Here, the computer may include, for example, a notebook, desktop, laptop, or VR HMD (e.g., HTC VIVE, Oculus Rift, GearVR, DayDream, PSVR, etc.) equipped with a web browser. Here, the VR HMD may include PC-based devices (e.g., HTC VIVE, Oculus Rift, FOVE, Deepon, etc.), mobile devices (e.g., GearVR, DayDream, Baofeng Mojing, Google Cardboard, etc.), console devices (PSVR), and stand-alone models independently implemented (e.g., Deepon, PICO, etc.). The portable terminal may be, for example, a wireless communication device that ensures portability and mobility, and may include not only a smart phone, a tablet PC, and a wearable device, but also various devices equipped with communication modules such as Bluetooth (BLE, Bluetooth Low Energy), NFC, RFID, ultrasonic, infrared, WiFi, and LiFi.

The description of the structure of the user terminal 200 described below with reference to FIG. 3 may be equally applied to the administrator terminal 400.

Referring to FIG. 3, the user terminal 200 may include a processor 50, a memory 60, a communication module 70, an input module 80, and a display module 90. Various components included in the user terminal 200 may be designed to be accommodated in the housing of the user terminal 200.

The processor 50 may be configured to execute instructions of an application stored in the memory 60 for performing a method of editing product-related information, in order to carry out various operations for editing the product-related information displayed on the electronic shelf label 300.

In an embodiment, the processor 50 may control the overall operations of components included in the user terminal 200 through the product-related information editing application of the memory 60, so as to provide an environment in which the product-related information may be changed quickly and efficiently.

For example, the processor 50 may control operations of the input module 80 and the communication module 70 so that various types of user inputs received through the input module 80 may be transmitted to the electronic shelf label 300 via the communication module 70.

The processor 50 may include a central processing unit (CPU) and/or a graphics processing unit (GPU). Further, the processor 50 may include at least one of ASICs (application specific integrated circuits), DSPs (digital signal processors), DSPDs (digital signal processing devices), PLDs (programmable logic devices), FPGAs (field programmable gate arrays), controllers, microcontrollers, microprocessors, and electric units for performing other functions.

The memory 60 may store instructions and data that may be used to create the product-related information editing environment. The memory 60 may store the product-related information editing application. The product-related information editing application may provide various types of user interfaces UI for providing the product-related information editing environment.

The memory 60 may include at least one non-transitory computer-readable storage medium and a transitory computer-readable storage medium. For example, the memory 60 may be various types of storage devices such as a ROM, an EPROM, a flash drive, or a hard drive. In addition, the memory 60 may include a web storage that performs a data storage function over the Internet.

The communication module 70 may include various types of communication devices that enable data to be transmitted to and received from the external device. For example, the communication module 70 may transmit and receive data to and from the electronic shelf label 300 through a wireless network.

The communication module 70 may wirelessly transmit and receive data with at least one of a base station, an external terminal, or any server over a mobile communication network established through a communication device capable of performing technical standards or communication methods for mobile communication (e.g., LTE (Long Term Evolution), LTE-A (Long Term Evolution-Advanced), 5G NR (New Radio), WiFi) or short-range communication methods.

In addition, the communication module 70 may be configured to transmit and receive data with an external electronic device using a Bluetooth method. For example, the communication module 70 may receive a pairing signal from the electronic shelf label 300 and may be paired with the electronic shelf label 300 using Bluetooth.

The input module 80 may be configured to receive various forms of user input from a user operating the user terminal 200. For example, the input module 80 may include a touch screen for receiving a touch input from the user. However, the present disclosure is not limited thereto, and the input module 80 may further include a keyboard capable of receiving a user input in the form of characters.

The display module 90 may display the product-related information editing application included in the memory 60. For example, the display module 90 may include a display device that displays various types of user interface UI images for providing a product-related information editing environment.

The display module 90 may include any one of a liquid crystal display (LCD), a thin film transistor-liquid crystal display (TFT-LCD), an organic light-emitting diode (OLED), a flexible display, or a three-dimensional (3D) display.

### - Electronic shelf label 300

The electronic shelf label 300 may be an electronic device mounted on a shelf 31 to display product-related information of products displayed on the shelf 31. For example, the electronic shelf label 300 may display information related to a product, such as the product name in Korean, the product name in English, the product's country of origin, the product price, and raw materials and weight/calories.

The electronic shelf label 300 may include a display module that displays, on a front surface thereof, the template to which the product-related information is applied, and a communication module capable of communicating with the user terminal 200. In addition, the electronic shelf label 300 may be equipped with integrated components and programs capable of Bluetooth communication.

The display module included in the electronic shelf label 300 may include an electronic paper display (EPD) that maintains a product information display state even when power is not supplied. Due to bistability, which enables the display state to be maintained for a long period of time even when the power supply is interrupted, the electronic paper display is suitable for the electronic shelf label 300, which requires reduced power consumption. Known types of electronic paper displays include a twist-ball type using a hemispherical twist ball charged with static electricity, an electrophoretic display applying an electrophoresis method and microcapsules, and a cholesteric liquid crystal display using cholesteric liquid crystals.

However, the present disclosure is not limited thereto, and the display module included in the electronic shelf label 300 may also include any one of a liquid crystal display (LCD), a thin film transistor-liquid crystal display (TFT-LCD), an organic light-emitting diode (OLED), a flexible display, or a three-dimensional (3D) display.

Referring to FIG. 3, the electronic shelf label 300 may include at least one button 1 or 2. For example, the electronic shelf label 300 may include a first button 1 and a second button 2. The first button 1 and the second button 2 may be provided in an area of the outer surface of the electronic shelf label 300.

According to a user input through the first button 1 and/or the second button 2, a pairing signal may be transmitted from the electronic shelf label 300 to the user terminal 200. Accordingly, the electronic shelf label 300 may be paired with the user terminal 200 based on the Bluetooth method. For example, when the user presses the first button 1 and/or the second button 2, the pairing signal may be transmitted from the electronic shelf label 300 to the user terminal 200, and the electronic shelf label 300 may be paired with the user terminal 200 based on the Bluetooth function.

In addition, a template list including a plurality of modified templates, to which product-related information changed by the user input through the user terminal 200 paired with the electronic shelf label 300 is applied, may be generated. In this case, by receiving the user input through the first button 1 and/or the second button 2, the electronic shelf label 300 may selectively receive data of any one of the plurality of modified templates included in the template list. For example, in response to the user input received by the electronic shelf label 300 through the first button 1 and/or the second button 2, data of the modified template generated with the highest priority among the plurality of modified templates may be transmitted from the user terminal 200 to the electronic shelf label 300.

### - Method of Editing Product-related information displayed on Electronic shelf label

Hereinafter, the method of editing the product-related information displayed on the electronic shelf label 300 through the product-related information editing application executed by at least one processor 50 of the user terminal 200 according to various embodiments will be described in detail with reference to FIGS. 4 to 18.

In various embodiments, at least one processor 50 of the user terminal 200 may execute the product-related information editing application stored in at least one memory 60 or operate it in a background state.

Hereinafter, although at least one processor 50 of the user terminal 200 operates to execute the instructions of the product-related information editing application so as to perform a method of providing the environment necessary for performing the above-described method of editing the product-related information, for convenience of explanation, the description will be simplified as being performed by the product-related information editing application instead of at least one processor 50 of the user terminal 200.

FIG. 4 is a flowchart illustrating a method S100 of editing the product-related information displayed on the electronic shelf label 300 according to an embodiment.

Referring to FIGS. 4 and 5, the method S100 of editing the product-related information may comprise pairing S101 of a user terminal with an electronic shelf label 300, where the user terminal 200 receives a pairing signal from the electronic shelf label 300, the signal being initiated by a user input via buttons 1 and 2 of the electronic shelf label 300, displaying S103 a template editing UI UI1 by the user terminal, where the UI provides an editing function for a template to which product information data can be applied, applying S105 the information according to an editing user input to the template, when the user terminal 200 receives the editing user input for the template via the template editing UI UI1, and transmitting S107 template data, to which the information according to the editing user input has been applied, from the user terminal 200 to the paired electronic shelf label 300.

In step S101 where the user terminal 200 is paired with the electronic shelf label 300, when the user presses the first button 1 and/or the second button 2 included in the electronic shelf label 300, the pairing signal may be transmitted from the electronic shelf label 300 to the user terminal 200, and the electronic shelf label 300 may be paired with the user terminal 200 based on a Bluetooth function.

Referring to FIG. 5, in step S103 where the user terminal 200 displays the template editing UI UI1, the template editing UI UI1, which receives the user input for changing the product-related information, may be displayed through the display module 90 of the user terminal 200.

The template editing UI UI1 may include a basic template T1 to which the product information data may be applied. The basic template T1 may be a template in a state where the product information data has not yet been entered. In addition, the template editing UI UI1 may include an editing board EB through which the user may input modifications to the product information data. Here, the product information data may include information data related to a product, such as the product name in Korean, the product name in English, the country of origin, the price, raw materials, and weight/calories.

The editing board EB may be configured to allow modification of product-related information such as the product name, product sub-name, product discount rate, price, and discounted price. For example, the user may input desired product information data into the editing board EB using the input module 80 such as a keyboard of the user terminal 200.

In step S105 where the user terminal 200 applies information according to the editing user input to the template, the user may input desired product information data into the editing board EB. The product information data entered into the editing board EB may be applied to the basic template T1, and accordingly, a modified template (T2) in which the product information data is displayed may be generated.

In step S107 where the user terminal 200 transmits the data of the template, to which information according to the editing user input has been applied, to the paired electronic shelf label 300, the data of the modified template T2, generated based on the product information data entered into the editing board EB of the template editing UI UI1, may be transmitted from the user terminal 200 to the electronic shelf label 300. In this case, the data of the modified template T2 may be transmitted to the electronic shelf label 300 through the communication module 70. The electronic shelf label 300 that has received the data of the modified template T2 may display the modified template T2 and provide it to the user.

FIG. 6 is a flowchart illustrating a method S200 of editing product-related information displayed on an electronic shelf label 300 according to another embodiment

Referring to FIGS. 6 and 7, the method S200 of editing the product-related information may comprise pairing S201 of a user terminal 200 with an electronic shelf label 300, where the user terminal 200 receives a pairing signal from the electronic shelf label 300, the signal being initiated by a user input via buttons 1 and 2 of the electronic shelf label 300, transmitting S203 product information data related to the electronic shelf label 300 from the electronic shelf label 300 to the user terminal 200, displaying S205 a template editing UI UI2 by the user terminal 200, where the UI UI2 provides an editing function for a template A1 to which product information data can be applied, applying S207 information according to editing user input for the template A1 received through template editing UI UI2 to template by the user terminal 200, when the user terminal 200 receives editing user input for the template A1 via the template editing UI UI2, transmitting S209 template data, to which the information according to the editing user input has been applied, from the user terminal 200 to the paired electronic shelf label 300.

Step S201, in which the user terminal 200 is paired with the electronic shelf label 300, may be substantially the same as step S101 in FIG. 4, in which the user terminal 200 is paired with the electronic shelf label 300. Accordingly, a detailed description of step S201 will be omitted.

In step S203, in which the user terminal 200 receives product information data related to the electronic shelf label 300 from the electronic shelf label 300, the electronic shelf label 300 may transmit the product information data assigned to the electronic shelf label 300 to the user terminal 200.

For example, referring again to FIG. 1, a plurality of different types of products may be displayed on the shelf 31, and a plurality of electronic shelf labels 300 may be provided on the shelf 31 to correspond to respective positions where the plurality of products are placed. In this case, the information data of each of the plurality of different types of products may be assigned to each of the plurality of electronic shelf labels 300 provided at the corresponding positions.

In detail, among the plurality of products displayed on the shelf 31, the information data of a first product may be pre-stored in a data storage device of a first electronic shelf label provided at a position corresponding to the position where the first product is placed, among the plurality of electronic shelf labels 300. The information data of the first product may be displayed on the first electronic shelf label.

In addition, the information data of a second product, which is different from the first product among the plurality of products, may be pre-stored in a data storage device of a second electronic shelf label provided at a position corresponding to the position where the second product is placed, among the plurality of electronic shelf labels 300. The information data of the second product may be displayed on the second electronic shelf label.

When the first electronic shelf label is paired with the user terminal 200, the first electronic shelf label may transmit the information data of the first product to the user terminal 200. In addition, when the second electronic shelf label is paired with the user terminal 200, the second electronic shelf label may transmit the information data of the second product to the user terminal 200.

Referring to FIG. 7, in step S205 where the user terminal 200 displays the template editing UI UI2, the template editing UI UI2, which receives a user input for modifying product information data related to the electronic shelf label 300 paired with the user terminal 200, may be displayed through the display module 90 of the user terminal 200.

The template editing UI UI2 may include a template A1 to which product information data has been applied. For example, the template editing UI UI2 may display the template A1 to which product information related to the electronic shelf label 300 paired with the user terminal 200 has been applied. In addition, the template editing UI UI2 may include a plurality of editing tabs k1, k2, k3, and k4 through which the user may input modifications to the product information data.

For example, the template editing UI UI2 may include a first editing tab k1 for modifying a product category, a second editing tab k2 for modifying a product zone, which indicates an area where the product is placed, a third editing tab k3 for modifying a product sub-name, and a fourth editing tab k4 for modifying a product discount rate.

However, the present disclosure is not limited thereto, and the template editing UI UI2 may also include an editing board EB, similar to the template editing UI UI1 of FIG. 5.

In step S207, in which information according to the editing user input is applied to the template A1, the user may input desired product information data using the plurality of editing tabs k1, k2, k3, and k4. For example, the user may click the plurality of editing tabs k1, k2, k3, and k4 and input modifications to the product information data by selecting desired product information data. In detail, when the user clicks any one of the plurality of editing tabs k1, k2, k3, and k4, a list of product information data related to the corresponding editing tab may be displayed, and the user may input modifications to the product information data by selecting desired product information data from the list.

The product information data entered through the plurality of editing tabs k1, k2, k3, and k4 may be applied to the template A1, and thus, a modified template A1' in which the product information data is displayed may be generated.

In step S209, in which the user terminal 200 transmits the data of the template, to which information according to the editing user input has been applied, to the paired electronic shelf label 300, the data of the modified template A1', generated based on the product information data entered through the plurality of editing tabs k1, k2, k3, and k4 of the template editing UI UI2, may be transmitted from the user terminal 200 to the electronic shelf label 300. In this case, the data of the modified template A1' may be transmitted to the electronic shelf label 300 through the communication module 70. The electronic shelf label 300 that has received the data of the modified template A1' may display the modified template A1' and provide it to the user.

FIG. 8 is a flowchart illustrating a method S300 of editing product-related information displayed on an electronic shelf label 300 according to a further embodiment.

Referring to FIGS. 8 and 9, the method S300 may comprise pairing S301 of a user terminal 200 with an electronic shelf label 300, where the user terminal 200 receives a pairing signal from the electronic shelf label 300, the signal being initiated by a user input via buttons 1 and 2 of the electronic shelf label 300, displaying S303 a template selection UI UI3 by the user terminal 200, where the UI UI3 provides a plurality of templates A1, A2, B1, B2, C1, and C2 to which the product information data can be applied, receiving S305 a template selection user input for selecting a first template A1 from among the plurality of templates A1, A2, B1, B2, C1, and C2 through the template selection UI UI3 by the user terminal 200, displaying S307 the template editing UI by the user terminal 200, where the UI provides an editing function for the first template A1 to which the product information data is applicable, applying S309 information according to editing user input for first template A1 received through template editing UI to first template A1 by the user terminal 200, and transmitting data of the first template A1, to which the information according to the editing user input for the first template A1 has been applied, from the user terminal 200 to the paired electronic shelf label 300

Step S301 in which the user terminal 200 is paired with the electronic shelf label 300 may be substantially the same as step S101 in FIG. 4, in which the user terminal 200 is paired with the electronic shelf label 300. Thus, a description of step S301 will be omitted.

In step S303 in which the user terminal 200 displays the template selection UI UI3, the user terminal 200 may display the template selection UI UI3 that provides a plurality of templates A1, A2, B1, B2, C1, and C2 classified by category. For example, the template selection UI UI3 may include a plurality of templates classified as a first category CA1, a plurality of templates classified as a second category CA2, a plurality of templates classified as a third category CA3, and a plurality of templates classified as a fourth category CA4. Here, the first category CA1 may relate to recommended templates, the second category CA2 may relate to price templates, the third category CA3 may relate to promotion templates, and the fourth category CA4 may relate to discount templates.

For example, the plurality of templates including the first template A1 and the second template A2 may be classified as the first category CA1. Further, the plurality of templates including the third template B1 and the fourth template B2 may be classified as the second category CA2. Furthermore, the plurality of templates including the fifth template C1 and the sixth template C2 may be classified as the third category CA3.

In addition, the template selection UI UI3 may include multiple "all template view" tabs V1, V2, V3, and V4. When the user clicks any one of the all template view tabs V1, V2, V3, and V4, an all template display UI UI4 for displaying all of the plurality of templates included in the category related to the corresponding all template view tab may be displayed. For example, when the user clicks the first template view tab V1, the all template display UI UI4 for displaying all of the plurality of templates classified as the first category CA1 may be displayed.

In step S305 in which the user terminal 200 receives the template selection user input for selecting the first template, the user terminal 200 may receive the selection user input for selecting any first template among the plurality of templates A1, A2, B1, B2, C1, and C2 classified by category through the template selection UI UI3. For example, the user may select any first template A1 in the template selection UI UI3.

In step S307 in which the user terminal 200 displays the template editing UI, the template editing UI that provides the editing function for the first template A1 selected by the user terminal 200 in step S305 may be displayed through the display module 90 of the user terminal 200. In this case, the template editing UI may be substantially the same as the template editing UI UI2 of FIG. 7.

In step S309 in which the user terminal 200 applies information according to the editing user input for the first template A1 to the first template A1, the user terminal 200 may generate a modified template A1' based on the editing user input for the first template A1. Step S309 may be substantially the same as step S207 of FIG. 6.

In step S311 in which the user terminal 200 transmits the data of the template, to which information according to the editing user input for the first template A1 has been applied, to the paired electronic shelf label 300, the data of the modified template A1', generated based on the product information data input through the template editing UI, may be transmitted from the user terminal 200 to the electronic shelf label 300. Step S311 may be substantially the same as step S209 of FIG. 6.

FIG. 10 is a flowchart illustrating a method S400 of editing product-related information displayed on an electronic shelf label 300 according to a further embodiment.

Referring to FIG. 10, the method S400 may comprise pairing S401 of a user terminal 200 with first electronic shelf label 300, where the user terminal 200 receives a pairing signal from the first electronic shelf label 300, the signal being initiated by a user input via buttons 1 and 2 of the first electronic shelf label 300, displaying S403 a template editing UI by the user terminal 200, where the UI provides an editing function for a template to which product information data can be applied, applying S405 information according to editing user input for template received through template editing UI to template by the user terminal 200, when the user terminal 200 receives editing user input for the template via the template editing UI, transmitting S407 template data, to which the information according to the editing user input has been applied, from the user terminal 200 to the paired electronic shelf label 300.

In step S401 in which the user terminal 200 is paired with the electronic shelf label 300, the user terminal 200 may be paired with the plurality of electronic shelf labels 300. The plurality of electronic shelf labels may include a first electronic shelf label and a second electronic shelf label different from the first electronic shelf label.

For example, step S401 may include step S411 in which the user terminal 200 receives the pairing signal according to the user input through the button of the first electronic shelf label and the user terminal 200 is paired with the first electronic shelf label, and step S421 in which the user terminal 200 receives the pairing signal according to the user input through the button of the second electronic shelf label and the user terminal 200 is paired with the second electronic shelf label.

When the user presses the first button and/or the second button included in the first electronic shelf label, a first pairing signal may be transmitted from the first electronic shelf label to the user terminal 200, and the first electronic shelf label may be paired with the user terminal 200 based on the Bluetooth function.

In addition, when the user presses the first button and/or the second button included in the second electronic shelf label, a second pairing signal may be transmitted from the second electronic shelf label to the user terminal 200, and the second electronic shelf label may be paired with the user terminal 200 based on the Bluetooth function.

In step S403 in which the user terminal 200 displays the template editing UI, the template editing UI that receives the user input for modifying product-related information may be displayed through the display module 90 of the user terminal 200. Step S403 may be substantially the same as step S103 of FIG. 4. Accordingly, a more detailed description of step S403 will be omitted.

In step S405 in which the user terminal 200 applies information according to the editing user input to the template, a modified template may be generated based on the editing user input entered by the user into the template editing UI. Step S405 may be substantially the same as step S105 of FIG. 4. Accordingly, a more detailed description of step S405 will be omitted.

In step S407 in which the user terminal 200 transmits the data of the template, to which information according to the editing user input has been applied, to the paired electronic shelf label, the data of the modified template generated based on the editing user input through the template editing UI may be transmitted from the user terminal 200 to the electronic shelf label.

In one embodiment, the data of the modified template may be selectively transmitted to either the first electronic shelf label or the second electronic shelf label paired with the user terminal 200. For example, the user terminal 200 may display a user terminal selection UI (not shown) for allowing the user to select one of the first electronic shelf label and the second electronic shelf label. When the user terminal 200 receives a user input selecting either the first electronic shelf label or the second electronic shelf label through the user terminal selection UI, the user terminal 200 may transmit the data of the modified template to the selected electronic shelf label 300.

However, the present disclosure is not limited thereto, and in another embodiment, the data of the modified template may be transmitted to both the first electronic shelf label and the second electronic shelf label paired with the user terminal 200. For example, when the user terminal 200 receives the user input selecting both the first electronic shelf label and the second electronic shelf label through the user terminal selection UI, the user terminal 200 may transmit the data of the modified template to both the first electronic shelf label and the second electronic shelf label.

Meanwhile, in one embodiment, after step S411 in which the first electronic shelf label is paired with the user terminal 200 is performed, step S421 in which the second electronic shelf label is paired with the user terminal 200 may not be performed, and step S403 in which the user terminal 200 displays the template editing UI may be performed immediately. In this case, the template editing UI for editing the product information data related to the first electronic shelf label may be displayed on the user terminal 200, and even if there is a user input through the button of the second electronic shelf label, pairing of the second electronic shelf label with the user terminal 200 may be blocked. In this way, while the editing operation for the product information data related to the first electronic shelf label is being performed, pairing of any additional electronic shelf label, other than the first electronic shelf label, with the user terminal 200 may be blocked.

FIG. 11 is a flowchart illustrating a method S500 of editing product-related information displayed on an electronic shelf label 300 according to a further embodiment.

Referring to FIG. 11, the method S500 may comprise pairing S501 of a user terminal 200 with a plurality of electronic shelf labels 300 including a first electronic shelf label and a second electronic shelf label, where the user terminal 200 receives a pairing signal from the plurality of electronic shelf labels 300, the signal being initiated by a user input via buttons 1 and 2 of the plurality of electronic shelf labels 300, receiving S503 product information data related to the plurality of electronic shelf labels 300 from the plurality of electronic shelf labels 300 by the user terminal, displaying S505 the template editing UI that provides an editing function for the template to which the information data of the first product related to the first electronic shelf label is applied by the user terminal 200, applying S507 the information according to a first editing user input to the template by the user terminal 200, when the user terminal 200 receives the first editing user input for editing the template to which the information data of the first product is applied through the template editing UI, displaying S509 the template editing UI that provides an editing function for the template to which the information data of the second product related to the second electronic shelf label is applied by the user terminal 200, applying S511 the information according to a second editing user input to the template by the user terminal 200, when the user terminal 200 receives the second editing user input for editing the template to which the information data of the second product is applied through the template editing UI, and transmitting S513 the data of the template to which the information according to the first editing user input is applied to the first electronic shelf label, and the data of the template to which the information according to the second editing user input is applied to the second electronic shelf label.

In step S501 in which the user terminal 200 is paired with the plurality of electronic shelf labels 300, the plurality of electronic shelf labels 300 may be paired with the user terminal 200. The plurality of electronic shelf labels may include a first electronic shelf label and a second electronic shelf label different from the first electronic shelf label.

For example, step S501 may include step S511 in which the user terminal 200 receives the pairing signal according to the user input through the button of the first electronic shelf label and the user terminal 200 is paired with the first electronic shelf label, and step S521 in which the user terminal 200 receives the pairing signal according to the user input through the button of the second electronic shelf label and the user terminal 200 is paired with the second electronic shelf label.

When the user presses the first button and/or the second button included in the first electronic shelf label, a first pairing signal may be transmitted from the first electronic shelf label to the user terminal 200, and the first electronic shelf label may be paired with the user terminal 200 based on the Bluetooth function.

In addition, when the user presses the first button and/or the second button included in the second electronic shelf label, a second pairing signal may be transmitted from the second electronic shelf label to the user terminal 200, and the second electronic shelf label may be paired with the user terminal 200 based on the Bluetooth function.

In step S203 in which the user terminal 200 receives product information data related to the plurality of electronic shelf labels 300 from the plurality of electronic shelf labels 300, the plurality of electronic shelf labels 300 may transmit the product information data assigned to each of the electronic shelf labels 300 to the user terminal 200.

For example, referring again to FIG. 1, a plurality of different types of products may be displayed on the shelf 31, and the plurality of electronic shelf labels 300 may be provided on the shelf 31 to correspond to respective positions where the plurality of products are placed. In this case, the information data of each of the plurality of different types of products may be assigned to each of the plurality of electronic shelf labels 300 provided at the corresponding positions.

In detail, among the plurality of products displayed on the shelf 31, the information data of a first product may be pre-stored in a data storage device of a first electronic shelf label provided at a position corresponding to the position where the first product is placed, among the plurality of electronic shelf labels 300. The information data of the first product may be displayed on the first electronic shelf label.

In addition, the information data of a second product, which is different from the first product among the plurality of products, may be pre-stored in a data storage device of a second electronic shelf label provided at a position corresponding to the position where the second product is placed, among the plurality of electronic shelf labels 300. The information data of the second product may be displayed on the second electronic shelf label.

Step S503 may include step S513 in which the user terminal 200 receives first product information data related to the first electronic shelf label from the first electronic shelf label, and step S523 in which the user terminal 200 receives second product information data related to the second electronic shelf label from the second electronic shelf label. Step S513 may be performed substantially simultaneously with step S511, and step S523 may be performed substantially simultaneously with step S521.

In step S505 in which the user terminal 200 displays the template editing UI that provides the editing function for the template to which the first product information data has been applied, the template editing UI that receives the user input for modifying the first product information data related to the first electronic shelf label paired with the user terminal 200 may be displayed through the display module 90 of the user terminal 200.

Here, the configuration of the template editing UI may be substantially the same as the template editing UI UI2 of FIG. 7. Accordingly, a more detailed description of the configuration of the template editing UI will be omitted.

In step S505, the user terminal 200 may display the template editing UI that provides the editing function for the template to which the first product information data has been applied.

In step S507 in which the user terminal 200 applies information according to the first editing user input to the template, a modified template may be generated based on the first editing user input entered by the user into the template editing UI. For example, the user may enter the first editing user input into the template editing UI to modify the contents of the template to which the contents of the first product have been applied. By applying the first editing user input to the template to which the contents of the first product have been applied, a first modified template may be generated.

In step S509 in which the user terminal 200 displays the template editing UI that provides the editing function for the template to which the second product information data has been applied, the template editing UI that receives the user input for modifying the second product information data related to the second electronic shelf label paired with the user terminal 200 may be displayed through the display module 90 of the user terminal 200.

Here, the configuration of the template editing UI may be substantially the same as the template editing UI UI2 of FIG. 7. Accordingly, a more detailed description of the configuration of the template editing UI will be omitted.

In step S509, the user terminal 200 may display the template editing UI that provides the editing function for the template to which the second product information data has been applied.

In step S511 in which the user terminal 200 applies information according to the second editing user input to the template, a modified template may be generated based on the second editing user input entered by the user into the template editing UI. For example, the user may enter a second editing user input into the template editing UI to modify the contents of the template to which the contents of the second product have been applied. By applying the second editing user input to the template to which the contents of the second product have been applied, a second modified template may be generated.

In step S513 in which the user terminal 200 transmits the data of the template, to which information according to the first editing user input has been applied, to the first electronic shelf label, and transmits the data of the template, to which information according to the first editing user input has been applied, to the second electronic shelf label, the data of the modified template generated based on the editing user input through the template editing UI may be transmitted from the user terminal 200 to the first electronic shelf label and the second electronic shelf label.

In one embodiment, the data of the first modified template, generated as the user enters the first editing user input into the template editing UI to modify the contents of the template to which the contents of the first product have been applied, may be transmitted to the first electronic shelf label. In addition, the data of the second modified template, generated as the user enters the second editing user input into the template editing UI to modify the contents of the template to which the contents of the second product have been applied, may be transmitted to the second electronic shelf label.

In this way, the information data of the first product assigned to the first electronic shelf label may be edited according to the user input, the edited information data of the first product may be transmitted to the first electronic shelf label, and the first electronic shelf label may display the first modified template to which the edited information data of the first product has been applied and provide it to the user.

In addition, the information data of the second product assigned to the second electronic shelf label may be edited according to the user input, the edited information data of the second product may be transmitted to the second electronic shelf label, and the second electronic shelf label may display the second modified template to which the edited information data of the second product has been applied and provide it to the user.

FIG. 12 is a flowchart illustrating a method S600 of editing product-related information displayed on an electronic shelf label 300 according to a further embodiment.

Referring to FIG. 12, the method S600 of may comprise pairing S601 of a user terminal 200 with a plurality of electronic shelf labels 300 including a first electronic shelf label and a second electronic shelf label, where the user terminal 200 receives a pairing signal from the plurality of electronic shelf labels 300, the signal being initiated by a user input via buttons 1 and 2 of the plurality of electronic shelf labels 300, receiving S603 identification information data related to the plurality of electronic shelf labels 300 from the plurality of electronic shelf labels 300 by the user terminal, displaying S605 an electronic shelf label selection UI UI5 that provides an identification information list (ID list), displaying S607 the template editing UI that provides an editing function for the template to which the information data of the first product related to the first electronic shelf label is applied by the user terminal 200, when the user terminal 200 receives a first identification information selection user input for selecting the first identification information through the electronic shelf label selection UI UI5, applying S609 the information according to a first editing user input to the template by the user terminal 200, when the user terminal 200 receives the first editing user input for editing the template to which the information data of the first product is applied through the template editing UI, displaying S611 the template editing UI that provides an editing function for the template to which the information data of the second product related to the second electronic shelf label is applied by the user terminal 200, when the user terminal 200 receives a second identification information selection user input for selecting the second identification information through the electronic shelf label selection UI UI5, applying S613 the information according to a second editing user input to the template by the user terminal 200, when the user terminal 200 receives the second editing user input for editing the template to which the information data of the second product is applied through the template editing UI, and transmitting S615 the data of the template to which the information according to the first editing user input is applied to the first electronic shelf label, and the data of the template to which the information according to the second editing user input is applied to the second electronic shelf label.

In step S601 in which the user terminal 200 is paired with the plurality of electronic shelf labels 300, the plurality of electronic shelf labels 300 may be paired with the user terminal 200. The plurality of electronic shelf labels may include a first electronic shelf label and a second electronic shelf label different from the first electronic shelf label.

For example, step S601 may include step S611 in which the user terminal 200 receives the pairing signal according to the user input through the button of the first electronic shelf label and the user terminal 200 is paired with the first electronic shelf label, and step S621 in which the user terminal 200 receives the pairing signal according to the user input through the button of the second electronic shelf label and the user terminal 200 is paired with the second electronic shelf label.

In step S603 in which the user terminal 200 receives data of identification information related to the plurality of electronic shelf labels 300 from the plurality of electronic shelf labels 300, data of a plurality of identification information capable of identifying each of the plurality of electronic shelf labels 300 may be transmitted from each of the plurality of electronic shelf labels 300 to the user terminal 200.

Here, the identification information refers to information capable of identifying the electronic shelf label 300, and may include a unique identification code number of the electronic shelf label 300, an arrangement area, and product information data assigned to the electronic shelf label 300.

For example, referring to FIG. 13, the data of first identification information ID1 of a first electronic shelf label 301, which includes the product name (chocolate) of the product assigned to the first electronic shelf label 301, the arrangement area (A zone), whether the first electronic shelf label 301 has been recently updated, and the time at which the first electronic shelf label 301 is paired with the user terminal 200, may be transmitted to the user terminal 200.

In addition, the data of second identification information ID2 of a second electronic shelf label 302, which includes the product name (cookie) of the product assigned to the second electronic shelf label 302, the arrangement area (A zone), whether the second electronic shelf label 302 has been recently updated, and the time at which the second electronic shelf label 302 is paired with the user terminal 200, may be transmitted to the user terminal 200.

In step S605 in which the user terminal 200 displays the electronic shelf label selection UI UI5, the electronic shelf label selection UI UI5 that provides the ID list, in which a plurality of identification information including the first identification information ID1 and the second identification information ID2, respectively transmitted from the first electronic shelf label 301 and the second electronic shelf label 302 to the user terminal 200, are listed, may be displayed on the user terminal 200. In this case, the ID list may include content in which each of the plurality of identification information is implemented in the form of a clickable bar.

In step S607 in which the user terminal 200 displays the template editing UI that provides the editing function for the template to which the first product information data has been applied, the user terminal 200 may receive a first identification information selection user input for selecting the first identification information ID1 received through the electronic shelf label selection UI UI5. For example, the user may select the first identification information ID1 by clicking the bar of the first identification information ID1 in the ID list.

Subsequently, the template editing UI that receives the user input for modifying the first product information data related to the first electronic shelf label 301 paired with the user terminal 200 may be displayed through the display module 90 of the user terminal 200.

Here, the configuration of the template editing UI may be substantially the same as the template editing UI UI2 of FIG. 7. Accordingly, a more detailed description of the configuration of the template editing UI will be omitted.

In step S607, the user terminal 200 may display the template editing UI that provides the editing function for the template to which the first product information data has been applied.

In step S609 in which the user terminal 200 applies information according to the first editing user input to the template, a modified template may be generated based on the first editing user input entered by the user into the template editing UI. For example, the user may enter the first editing user input into the template editing UI to modify the contents of the template to which the contents of the first product have been applied. By applying the first editing user input to the template to which the contents of the first product have been applied, the first modified template may be generated.

In step S611 in which the user terminal 200 displays thee template editing UI that provides the editing function for the template to which the second product information data has been applied, the user terminal 200 may receive a second identification information selection user input for selecting the second identification information ID2 received through the electronic shelf label selection UI UI5. For example, the user may select the second identification information ID2 by clicking the bar of the second identification information ID2 in the ID list.

Subsequently, the template editing UI that receives the user input for modifying the second product information data related to the second electronic shelf label 302 paired with the user terminal 200 may be displayed through the display module 90 of the user terminal 200.

Here, the configuration of the template editing UI may be substantially the same as the template editing UI UI2 of FIG. 7. Accordingly, a more detailed description of the configuration of the template editing UI will be omitted.

In step S611, the user terminal 200 may display the template editing UI that provides the editing function for the template to which the second product information data has been applied.

In step S613 in which the user terminal 200 applies information according to the second editing user input to the template, the modified template may be generated based on the second editing user input entered by the user into the template editing UI. For example, the user may enter the second editing user input into the template editing UI to modify the contents of the template to which the contents of the second product have been applied. By applying the second editing user input to the template to which the contents of the second product have been applied, a second modified template may be generated.

In step S615 in which the user terminal 200 transmits the data of the template, to which information according to the first editing user input has been applied, to the first electronic shelf label 301, and transmits the data of the template, to which information according to the second editing user input has been applied, to the second electronic shelf label 302, the data of the modified template generated based on the editing user input through the template editing UI may be transmitted from the user terminal 200 to the first electronic shelf label 301 and the second electronic shelf label 302.

In one embodiment, the data of the first modified template, generated as the user enters the first editing user input into the template editing UI to modify the contents of the template to which the contents of the first product have been applied, may be transmitted to the first electronic shelf label 301. In addition, the data of the second modified template, generated as the user enters the second editing user input into the template editing UI to modify the contents of the template to which the contents of the second product have been applied, may be transmitted to the second electronic shelf label 302.

For example, as shown in FIG. 14, after step S609 and step S613, an electronic shelf label selection UI UI6 that provides the identification information list in which a plurality of identification information are listed, including the first identification information containing the data of the first modified template and the second identification information containing the data of the second modified template, may be displayed on the user terminal 200.

When any one of the plurality of identification information listed in the identification information list is selected, the data of the modified template included in the selected identification information may be transmitted to the electronic shelf label corresponding to the selected identification information. For example, when the bar of the first identification information including the data of the first modified template is clicked, the data of the first modified template may be transmitted to the first electronic shelf label 301.

FIG. 15 is a flowchart illustrating a method S700 of editing product-related information displayed on an electronic shelf label 300 according to a further embodiment.

Referring to FIGS. 15 and 5, the method S700 may comprise displaying S701 a template editing UI UI1 by a user terminal 200, where the UI UI1 provides an editing function for a template to which product information data can be applied, applying S703 the information according to an editing user input to the template, when the user terminal 200 receives the editing user input for the template via the template editing UI UI1, pairing S705 of the user terminal 200 with an electronic shelf label 300, where the user terminal 200 receives a pairing signal from the electronic shelf label 300, the signal being initiated by a user input via buttons 1 and 2 of the electronic shelf label 300, and transmitting S707 template data, to which the information from the editing user input has been applied, from the user terminal 200 to the paired electronic shelf label 300.

The method S700 may be substantially the same as the method S100 of FIG. 4, except that step S705, in which the user terminal 200 is paired with the electronic shelf label 300, is performed after either step S701, in which the user terminal 200 displays the template editing UI UI1, or step S703, in which the user terminal 200 applies information according to the editing user input to the template. Accordingly, a more detailed description of the steps S701, S703, S705, and S707 included in the method S700 will be omitted.

FIG. 16 is a flowchart illustrating a method S800 of editing product-related information displayed on an electronic shelf label 300 according to a further embodiment.

Referring to FIGS. 16 and 9, the method S800 may comprise displaying S801 a template selection UI UI3 by the user terminal 200, where the UI UI3 provides a plurality of templates A1, A2, B1, B2, C1, and C2 to which the product information data can be applied, receiving S803 a template selection user input for selecting a first template A1 from among the plurality of templates through the template selection UI UI3 by the user terminal 200, displaying S805 a template editing UI that provides an editing function for the first template A1 to which the product information data is applicable by the user terminal 200, applying S807 information according to editing user input for template received through template editing UI to template by the user terminal 200, when the user terminal 200 receives editing user input for the template A1 via the template editing UI, pairing S809 of the user terminal 200 with an electronic shelf label 300, where the user terminal 200 receives a pairing signal from the electronic shelf label 300, the signal being initiated by a user input via buttons 1and 2 of the electronic shelf label 300, and transmitting S811 template data, to which the information according to the editing user input has been applied, from the user terminal 200 to the paired electronic shelf label 300

The method S800 may be substantially the same as the method S300 of FIG. 8, except that step S809, in which the user terminal 200 is paired with the electronic shelf label 300, is performed after any one of step S801 in which the user terminal 200 displays the template editing UI UI1, step S803 in which the user terminal 200 receives a template selection user input, or step S805 in which the user terminal 200 applies information according to the editing user input to the template. Accordingly, a more detailed description of steps S801, S803, S805, S807, S809, and S811 included in the method S800 will be omitted.

FIG. 17 is a flowchart illustrating a method S900 of editing product-related information displayed on an electronic shelf label 300 according to a further embodiment.

Referring to FIGS. 17 and 7, the method S900 may comprise displaying S901 editing-target product selection UI that provides product information list including information data of plurality of products by a user terminal 200, receiving S903 product selection user input for selecting information data of any one product among plurality of products through editing-target product selection UI by the user terminal 200, displaying S905 a template editing UI UI2 that provides an editing function for the template A1 to which the information data of selected product is applied by the user terminal 200, applying S907 information according to editing user input for template A1 received through template editing UI to template by the user terminal 200, pairing S909 of the user terminal 200 with an electronic shelf label 300, where the user terminal 200 receives a pairing signal from the electronic shelf label 300, the signal being initiated by a user input via buttons 1 and 2 of the electronic shelf label 300, transmitting S209 template data, to which the information according to the editing user input has been applied, from the user terminal 200 to the paired electronic shelf label 300

The method S900 may be substantially the same as the method S800 of FIG. 16, except that, prior to step S905 in which the user terminal 200 displays the template editing UI UI2, step S901 in which the user terminal 200 displays the editing-target product selection UI, and step S903 in which the user terminal 200 receives a product selection user input, are further performed. Thus, a more detailed description of the steps S905, S907, S909, and S911 included in the method S900 will be omitted, and steps S901 and S903 will be described in detail.

In step S901 in which the user terminal 200 displays the editing-target product selection UI, the product selection UI that provides a product information list in which information data of a plurality of products is listed may be displayed on the user terminal 200.

For example, the product selection UI may provide a product information list in which first information data, including information such as the Korean product name, English product name, country of origin, price, raw materials, and weight/calories of a first product, and second information data, including information such as the Korean product name, English product name, country of origin, price, raw materials, and weight/calories of a second product, are listed.

In step S903 in which the user terminal 200 receives a product selection user input, the user may select the information data of any one product among the plurality of products through the product selection UI. For example, the user may select the information data of a first product among the plurality of products. Thus, the user terminal 200 may receive a product selection user input for selecting the first product.

FIG. 18 is a flowchart illustrating a method S1000 of editing product-related information displayed on an electronic shelf label 300 according to a further embodiment.

Referring to FIGS. 18 and 7, the method S1000 may comprise displaying S1001 editing-target product selection UI that provides product information list including information data of plurality of products by the user terminal 200, receiving S1003 first product selection user input for selecting information data of first product among plurality of products through editing-target product selection UI by the user terminal 200, displaying S1005 a template editing UI UI2 that provides an editing function for the template A1 to which the information data of first product is applied by the user terminal 200, applying S1007 information according to first editing user input for template A1 to which information data of first product received through template editing UI UI2 is applied to template by the user terminal 200, receiving S1009 second product selection user input for selecting information data of second product among plurality of products through editing-target product selection UI by the user terminal 200, displaying S1011 a template editing UI UI2 that provides an editing function for the template A1 to which the information data of second product is applied by the user terminal 200, applying S1013 information according to second editing user input for template A1 to which information data of second product received through template editing UI UI2 is applied to template by the user terminal 200, pairing S1015 of a user terminal 200 with first electronic shelf label, where the user terminal 200 receives a pairing signal from the first electronic shelf label, the signal being initiated by a user input via a button of the first electronic shelf label, pairing S1017 of a user terminal 200 with second electronic shelf label, where the user terminal 200 receives a pairing signal from the second electronic shelf label, the signal being initiated by a user input via a button of the second electronic shelf label, and transmitting S1019 the data of the template to which the information according to the first editing user input is applied to the first electronic shelf label, and the data of the template to which the information according to the second editing user input is applied to the second electronic shelf label

The method S1000 may be substantially the same as the method S900 of FIG. 17, except that it includes steps S1015 and S1017 in which the user terminal 200 is paired with a plurality of electronic shelf labels including the first electronic shelf label and the second electronic shelf label; that information according to the first editing user input is applied through steps S1003 to S1007, and information according to the second editing user input is applied through steps S1009 to S1013; and that, in step S1019, the data of the template to which the information according to the first editing user input has been applied is transmitted to the first electronic shelf label, while the data of the modified template to which the information according to the second editing user input has been applied is transmitted to the second electronic shelf label. Accordingly, a more detailed description of the steps S1001, S1003, S1005, S1007, S1009, S1011, S1013, S1015, S1017, and S1019 included in the method S1000 will be omitted.

The embodiments according to the present disclosure described above may be implemented in the form of program instructions that may be executed through various computer components and recorded in a computer-readable recording medium. The computer-readable recording medium may include program instructions, data files, data structures, and the like alone or in combination with each other. The program instructions recorded in the computer-readable recording medium may be specially designed and configured for the present disclosure or may be known and available to those skilled in the field of computer software. Examples of computer-readable recording media include hardware devices specially configured to store and execute program instructions, such as magnetic media such as hard disks, floppy disks and magnetic tapes, optical recording media such as CD-ROM and DVD, magneto-optical media such as floptical disks, and ROM, RAM, flash memory, and the like. Examples of the program instructions include not only machine language codes such as those generated by the compiler, but also high-level language codes that may be executed by a computer using an interpreter or the like. The hardware device may be changed to one or more software modules to perform processing according to the present disclosure, and vice versa.

The specific executions described in the present disclosure are examples, and the scope of the present disclosure is not limited thereto in any manner. For the sake of brevity of the present disclosure, the description of conventional electronic configurations, control systems, software, and other functional aspects of the systems may be omitted. In addition, the connection or connection members of the lines between the components illustrated in the drawings exemplarily represent functional connections and/or physical or circuit connections, and may be represented as various alternative or additional functional connections, physical connections, or circuit connections in an actual device. In addition, if there is no specific mention such as "essential", "important", or the like, it may not be an essential component for the application of the present disclosure.

In addition, although the detailed description of the present disclosure has been made with reference to the preferred embodiments of the present disclosure, it will be understood that those skilled in the art or those skilled in the art can variously modify and change the present disclosure within the scope not departing from the spirit and technical areas of the present disclosure described in the claims to be described later. Therefore, the technical scope of the present disclosure is not limited to the contents described in the detailed description of the specification, but should be determined by the claims.

### INDUSTRIAL APPLICABILITY

The present disclosure has industrial applicability in that it can improve the efficiency of product information management by an administrator by providing an environment in which product-related information displayed on an electronic shelf label can be easily edited through a user terminal.

## Claims

1. A method for editing product-related information displayed on an electronic shelf label, the method comprising:
pairing of a user terminal with an electronic shelf label, where the user terminal receives a pairing signal from the electronic shelf label, the signal being initiated by a user input via a button of the electronic shelf label;
displaying a template editing UI by the user terminal, where the UI provides an editing function for a template to which product information data can be applied;
applying the information according to an editing user input to the template, when the user terminal receives the editing user input for the template via the template editing UI; and
transmitting template data, to which the information according to the editing user input has been applied, from the user terminal to the paired electronic shelf label.

2. The method of claim 1, further comprising:
transmitting product information data related to the electronic shelf label from the electronic shelf label to the user terminal before displaying a template editing UI by the user terminal,
wherein in the displaying a template editing UI by the user terminal, the user terminal displays a template editing UI that provides an editing function for the template to which the product information data related to the electronic shelf label is applied.

3. The method of claim 1, wherein in the pairing of a user terminal with an electronic shelf label, the pairing signal is transmitted from the electronic shelf label to the user terminal according to a user input through the button of the electronic shelf label, so that the user terminal is paired with the electronic shelf label based on a Bluetooth method.

4. The method of claim 1, further comprising:
displaying a template selection UI by the user terminal, where the UI provides a plurality of templates to which the product information data can be applied before displaying a template editing UI by the user terminal,
wherein in the displaying a template editing UI by the user terminal, the user terminal displays the template editing UI that provides an editing function for a first template to which the product information data is applicable, when the user terminal receives a template selection user input for selecting the first template from among the plurality of templates through the template selection UI.

5. The method of claim 1, wherein the pairing of a user terminal with an electronic shelf label comprising:
pairing the user terminal with a first electronic shelf label according to a user input through a button of the first electronic shelf label; and
pairing the user terminal with a second electronic shelf label according to a user input through a button of the second electronic shelf label which is different from the first electronic shelf label.

6. The method of claim 5, further comprising:
receiving first product information data related to the first electronic shelf label from the first electronic shelf label by the user terminal; and
receiving second product information data related to the second electronic shelf label from the second electronic shelf label by the user terminal;
wherein in the displaying a template editing UI by the user terminal, and the applying the information according to an editing user input to the template,
the user terminal displays the template editing UI that provides an editing function for the template to which the information data of the first product is applied,
the user terminal applies the information according to a first editing user input to the template, when the user terminal receives the first editing user input for editing the template to which the information data of the first product is applied through the template editing UI,
the user terminal displays the template editing UI that provides an editing function for the template to which the information data of the second product is applied, and
the user terminal applies the information according to a second editing user input to the template, when the user terminal receives the second editing user input for editing the template to which the information data of the second product is applied through the template editing UI, and
wherein in the transmitting template data, to which the information from the editing user input has been applied, from the user terminal to the paired electronic shelf label,
the user terminal transmits the data of the template to which the information according to the first editing user input is applied to the first electronic shelf label, and transmits the data of the template to which the information according to the second editing user input is applied to the second electronic shelf label.

7. The method of claim 5, further comprising:
before displaying a template editing UI by the user terminal,
receiving first identification information data related to the first electronic shelf label from the first electronic shelf label by the user terminal;
receiving second identification information data related to the second electronic shelf label from the second electronic shelf label by the user terminal; and
displaying an electronic shelf label selection UI that provides an identification information list including the first identification information and the second identification information, based on the first identification information data and second identification information data by the user terminal.

8. The method of claim 7, wherein in the displaying a template editing UI by the user terminal, and the applying the information according to an editing user input to the template,
the user terminal displays the template editing UI that provides an editing function for the template to which the information data of the first product related to the first electronic shelf label is applied, when the user terminal receives a first identification information selection user input for selecting the first identification information through the electronic shelf label selection UI,
the user terminal applies the information according to a first editing user input to the template, when the user terminal receives the first editing user input for editing the template to which the information data of the first product is applied through the template editing UI,
the user terminal displays the template editing UI that provides an editing function for the template to which the information data of the second product related to the first electronic shelf label is applied, when the user terminal receives a second identification information selection user input for selecting the second identification information through the electronic shelf label selection UI,
the user terminal applies the information according to a second editing user input to the template, when the user terminal receives the second editing user input for editing the template to which the information data of the second product is applied through the template editing UI, and
wherein in the transmitting template data, to which the information from the editing user input has been applied, from the user terminal to the paired electronic shelf label,
the user terminal transmits the data of the template to which the information according to the first editing user input is applied to the first electronic shelf label, and transmits the data of the template to which the information according to the second editing user input is applied to the second electronic shelf label.

9. The method of claim 1, wherein in the displaying a template editing UI by the user terminal, pairing of an additional electronic shelf label, different from the electronic shelf label, with the user terminal is blocked according to a user input through a button of the additional electronic shelf label.

10. A method for editing product-related information displayed on an electronic shelf label, the method comprising:
displaying a template editing UI by a user terminal, where the UI provides an editing function for a template to which product information data can be applied;
applying the information according to an editing user input to the template, when the user terminal receives the editing user input for the template via the template editing UI;
pairing of the user terminal with an electronic shelf label, where the user terminal receives a pairing signal from the electronic shelf label, the signal being initiated by a user input via a button of the electronic shelf label; and
transmitting template data, to which the information from the editing user input has been applied, from the user terminal to the paired electronic shelf label.

11. The method of claim 10, further comprising:
displaying a template selection UI by the user terminal, where the UI provides a plurality of templates to which the product information data can be applied before displaying a template editing UI by the user terminal,
wherein in the displaying a template editing UI by the user terminal, the user terminal displays the template editing UI that provides an editing function for a first template to which the product information data is applicable, when the user terminal receives a template selection user input for selecting the first template from among the plurality of templates through the template selection UI.

12. The method of claim 10, further comprising:
displaying an editing-target product selection UI by the user terminal, where the UI provides a product information list containing information data for multiple products before the displaying a template editing UI by a user terminal.

13. The method of claim 12, wherein in the displaying a template editing UI by a user terminal, the user terminal displays a template editing UI that provides an editing function for the template to which the information data of the selected product is applied, when the user terminal receives a product selection user input for selecting information data of any one product from among the plurality of products through the editing-target product selection UI.

14. The method of claim 12, wherein in the pairing of the user terminal with an electronic shelf label,
the user terminal is paired with the first electronic shelf label according to a user input through a button of the first electronic shelf label, and the user terminal is paired with the second electronic shelf label according to a user input through a button of a second electronic shelf label different from the first electronic shelf label.

15. The method of claim 14, wherein in the displaying a template editing UI by the user terminal, and the applying the information according to an editing user input to the template,
the user terminal displays a template editing UI that provides an editing function for the template to which the information data of the first product is applied, when the user terminal receives a first product selection user input for selecting the information data of any first product from among the plurality of products through the editing-target product selection UI,
the user terminal applies the information according to the first editing user input to the template, when the user terminal receives a first editing user input for editing the template to which the information data of the first product is applied through the template editing UI,
the user terminal displays a template editing UI that provides an editing function for the template to which the information data of the second product is applied, when the user terminal receives a second product selection user input for selecting the information data of any second product, different from the first product, from among the plurality of products through the editing-target product selection UI,
the user terminal applies the information according to the second editing user input to the template, when the user terminal receives a second editing user input for editing the template to which the information data of the second product is applied through the template editing UI, and
wherein in the transmitting template data, to which the information from the editing user input has been applied, from the user terminal to the paired electronic shelf label,
the user terminal transmits the data of the template to which the information according to the first editing user input is applied to the first electronic shelf label, and transmits the data of the template to which the information according to the second editing user input is applied to the second electronic shelf label.

16. A system for performing a method of editing product-related information displayed on an electronic shelf label, the system comprising:
an electronic shelf label provided on a shelf where a product is displayed and including a button; and
a user terminal including a memory in which a program for performing the method of editing the product-related information displayed on the electronic shelf label is stored, and a processor for executing the program,
wherein the method comprises:
pairing of a user terminal with an electronic shelf label, where the user terminal receives a pairing signal from the electronic shelf label, the signal being initiated by a user input via a button of the electronic shelf label;
displaying a template editing UI by the user terminal, where the UI provides an editing function for a template to which product information data can be applied;
applying the information according to an editing user input to the template, when the user terminal receives the editing user input for the template via the template editing UI; and
transmitting template data, to which the information from the editing user input has been applied, from the user terminal to the paired electronic shelf label.

17. A user terminal for editing product-related information displayed on an electronic shelf label, the user terminal comprising:
a memory in which a program for performing the method of editing the product-related information displayed on the electronic shelf label is stored; and
a processor for executing the program,
wherein the method comprises:
pairing of a user terminal with an electronic shelf label, where the user terminal receives a pairing signal from the electronic shelf label, the signal being initiated by a user input via a button of the electronic shelf label;
displaying a template editing UI by the user terminal, where the UI provides an editing function for a template to which product information data can be applied;
applying the information according to an editing user input to the template, when the user terminal receives the editing user input for the template via the template editing UI; and
transmitting template data, to which the information from the editing user input has been applied, from the user terminal to the paired electronic shelf label.
